# EUROPEAN PATENT APPLICATION

(11) **EP 2 262 214 A1**
(43) Date of publication of application: **15.12.2010**
(21) Application number: 09733919.6
(22) Date of filing: 06.02.2009
(51) Int. Cl.: H04M 3/42, H04L 12/56, H04M 3/00

(54) **IMS SYSTEM, AS DEVICE AND MGW DEVICE, AND METHOD OF NOTIFYING REGULATION ON CONGESTION IN IMS SYSTEM**

(30) Priority: 21.04.2008 JP 2008110397
(71) Applicant: NEC Corporation, Minato-ku Tokyo 108-8001 (JP)
(72) Inventor: TAGUCHI, Hiroshi, Tokyo 108-8001 (JP)
(74) Representative: Betten & Resch
(86) International application number: PCT/JP2009/052020
(87) International publication number: WO 2009/130931

(57) **Abstract**

The present invention provides a function of enabling common carriers to easily perform the customization of restriction information and restriction guidance, in which an AS apparatus, upon receipt of a connection start request from a terminal through an MGW apparatus, confirms whether or not a restriction state is in effect, and when no restriction is in effect, performs connection to the terminal, and when restriction is in-effect, acquires a restriction class Key to transmit a signal, to which the aforementioned acquired restriction class Key has been added, to the MGW apparatus; and the MGW apparatus, upon receipt of the signal, acquires a restriction class Key to edit and transmit to the aforementioned terminal, a restriction guidance signal which indicates the restriction content by using the data associated with the restriction class Key.

## Description

This application is based upon and claims the benefit of priority from Japanese patent application No. 2008-110397, filed on April 21, 2008, the disclosure of which is incorporated herein in its entirety by reference.

### Background of the invention

### Field of the Invention

The present invention relates to an IMS (IP Multimedia Subsystem) system including an AS (Application Server) apparatus and an MGW (Media Gateway) apparatus, and, in particular, to a method and system for performing control depending on the congestion state.

### Description of the Related Art

As a system for realizing a next generation network (NGN), an IMS system which is disclosed in, for example, Japanese Patent Laid-Open No. 2007-215175 has been proposed.

In switchboard-based systems, congestion restriction control processes and guidance connection processes, which are independently established by common carriers, are applied. Similar processes are supposed to be performed in an IMS system as well, when replacement of a switchboard system with an IMS system is made.

The IMS standard specifies a 503 signal as the signal which is transmitted by a node when it encounters a congestion state, and the 503 signal specifies a Reason header to which a reason code is added, and an object protocol, cause, and information setting parameter (reason-text) are specified in the Reason header.

When replacement of a switchboard system with an IMS system is made, the following problems will arise.

The first problem is that the 503 signal of the IMS standard does not specify a scheme for selecting a restriction guidance of the connected party for each congestion factor, which has been realized in conventional switchboard systems, As a result, when replacement of a conventional switchboard system with an IMS system is made, there may be cases in which a guidance connection process equal to that of the switchboard system cannot be provided, thereby hindering the system replacement of the system.

The second problem is that there is no specification on a scheme for selecting and setting guidance information, through which restriction information is interchanged between an AS apparatus for performing service control and an MGW apparatus for performing call connection, and connection to a mobile equipment terminal is performed based on the restriction information. As a result, when restriction states are encountered, access to guidance information that will enable call connection to a mobile equipment terminal cannot be obtained. And there may be cases in which customization of the guidance connection processing, which needs to be realized independently by each common carrier, for each common carrier becomes difficult, thereby hindering the system replacement.

### Summary of the Invention

It is an object of the present invention to provide a function to enable the setting of restriction information between nodes, which is independently established by common carriers by using an information setting parameter (reason-text) specified by the IMS standard, and thereby to enable common carriers to easily customize the restriction information and the restriction guidance by associating the restriction information, which is independently established by common carriers, with the restriction guidance. Further, it is also an object of the present invention to accelerate the transition of communication networks into IP-based systems by promoting the replacement of switchboard systems with IMS systems.

The IMS system of the present invention is an IMS system including an MGW apparatus for performing call control processing and an AS apparatus for performing service control processing, wherein
the aforementioned AS apparatus comprises an AS apparatus storage section for retaining a current restriction state, and a common-carrier-specific restriction information management table in which restriction content established independently by a common carrier and a restriction class Key are stored in association with each other;
the aforementioned AS apparatus, upon receipt of a connection start request from a terminal via the aforementioned MGW apparatus, refers to the aforementioned AS apparatus storage section to confirm whether or not a restriction state is in effect, and when no restriction is in effect, performs connection with the aforementioned terminal and when a restriction state is in effect, acquires an associated restriction class Key from the aforementioned common-carrier-specific restriction information management table to transmit a signal added with the aforementioned acquired restriction class Key to the aforementioned MGW apparatus; and wherein
the aforementioned MGW apparatus comprises a restriction information-class/guidance-class association table in which a restriction class Key and a restriction guidance class Key are stored in association with each other, and an MGW apparatus storage section for storing data representing various restriction contents in association with the aforementioned restriction class Key, and
the aforementioned MGW apparatus, upon receipt of a connection start request from the aforementioned terminal, transmits the request to the aforementioned AS apparatus, and thereafter upon receipt of the aforementioned signal from the aforementioned AS apparatus, acquires the aforementioned restriction class Key to edit and transmit a restriction guidance signal indicating restriction content by using data stored in the aforementioned MGW apparatus storage section in association with the acquired restriction class Key, to the aforementioned terminal.

The AS apparatus of the present invention is an AS apparatus for performing service control processing and for making up an IMS system along with an MGW apparatus for performing call control processing, the aforementioned AS apparatus comprising
an AS apparatus storage section for retaining a current restriction state, and a common-carrier-specific restriction information management table in which a restriction content established independently by a common carrier and a restriction class Key are stored in association with each other, and
the aforementioned AS apparatus, upon receipt of a connection start request from a terminal via the aforementioned MGW apparatus, refers to
the aforementioned AS apparatus storage section to confirm whether or not a restriction state is in effect and when no restriction is in effect, performs connection with the aforementioned terminal and when a restriction is in effect, acquires an associated restriction class Key from the aforementioned common-carrier-specific restriction information management table to transmit a signal, to which the aforementioned acquired restriction class Key has been added, to the aforementioned MGW apparatus.

The MGW apparatus of the present invention is an MGW apparatus for performing call control processing and for making up an IMS system along with an AS apparatus for performing service control, the aforementioned MGW apparatus comprising
a restriction information-class/guidance-class association table in which a restriction class Key and a restriction guidance class Key are stored in association with each other, and an MGW apparatus storage section for storing data representing various restriction contents in association with the aforementioned restriction class Key, and
the aforementioned MGW apparatus, upon receipt of a connection start request from the aforementioned terminal, transmits the request to the aforementioned AS apparatus and thereafter, upon receipt of the signal to which the aforementioned restriction class Key from the aforementioned AS apparatus has been added, acquires the aforementioned restriction class Key to edit and transmit to the aforementioned terminal. A restriction guidance signal indicating a restriction content by using data stored in association with the acquired restriction class Key in the aforementioned MGW apparatus storage section.

The method of notifying congestion restriction performed in an IMS system of the present invention is a method of notifying congestion restriction performed in an IMS system, the aforementioned IMS system comprising:
an MGW apparatus comprising a restriction information-class/guidance-class association table in which a restriction class Key and a restriction guidance class Key are stored in association with each other, and an MGW apparatus storage section for storing data representing various restriction contents in association with the aforementioned restriction class Key, and for performing call control processing; and
an AS apparatus comprising an AS apparatus storage section for retaining a current restriction state, and a common-carrier-specific restriction information management table in which restriction content established independently by a common carrier and a restriction class Key are stored in association with each other, and for performing service control processing;
said method comprising:
   a process in which the aforementioned MGW apparatus receives a connection start request from a terminal and transmits the request to the aforementioned AS apparatus;
   a process in which the aforementioned AS apparatus having received the connection start request from the terminal through the aforementioned MGW apparatus refers to the aforementioned AS apparatus storage section to confirm that a restriction is in effect, and acquires an associated restriction class Key from the aforementioned common-carrier-specific restriction information management table to transmit to the aforementioned MGW apparatus a signal to which the aforementioned acquired restriction class Key has been added; and
   a process in which the aforementioned MGW apparatus having received the aforementioned signal from the aforementioned AS apparatus acquires the aforementioned restriction class Key to edit and transmit to the aforementioned terminal. A restriction guidance signal indicating restriction content using data stored in the aforementioned MGW apparatus storage section in association with the acquired restriction class Keys.

### Brief Description of the Drawings

FIG. 1 is a block diagram to show the configuration of principal parts of an exemplary embodiment of the present invention;
FIG. 2 shows an operating state of the exemplary embodiment shown in FIG. 1;
FIG. 3 shows the stored information of common-carrier-specific restriction information management table 21 in FIG. 2;
FIG. 4 shows the stored information of restriction information-class/guidance-class association table 22 in FIG. 2;
FIG. 5 is a flowchart to show a processing operation to set the common-carrier-specific restriction information in AS apparatus 1; and
FIG. 6 is a flowchart to show a processing operation to set the restriction guidance information in MGW apparatus 2.

### Exemplary Embodiment

Next, exemplary embodiments of the present invention will be described with reference to the drawings.

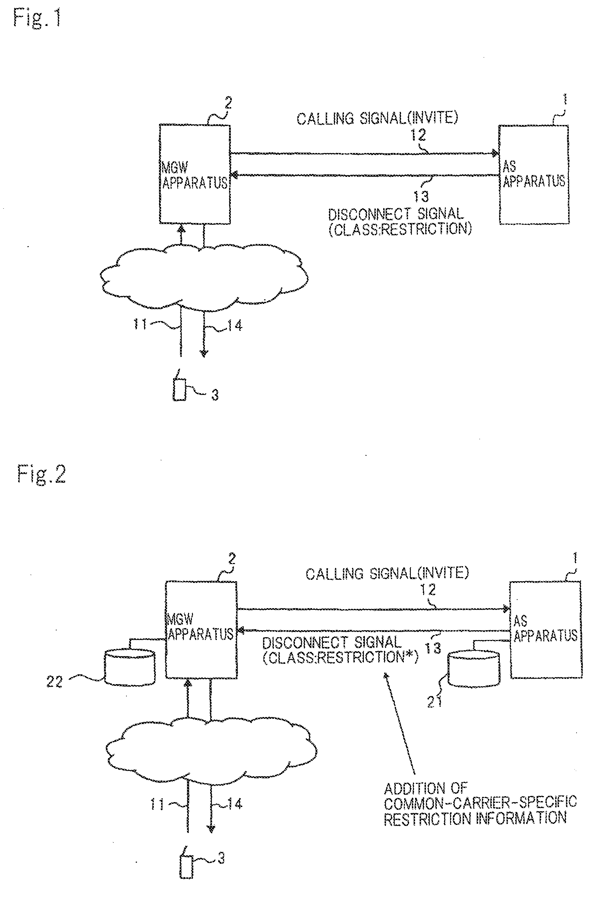

FIG. 1 is a block diagram to show the configuration of principal parts of an exemplary embodiment of the RIMS system according to the present invention.

In FIG. 1, AS apparatus 1 is one of the apparatuses that are responsible for service control processing, and comprises a congestion restriction control function as one function of service control processing. MGW apparatus 2 is one of the apparatuses that are responsible for call control processing, and performs call connection processing between mobile equipment, and the like. Mobile equipment terminal 3 represents a portable telephone or telephone equipment that utilizes IMS network services.

Calling signal 11 is a connection start request signal which is transmitted from mobile equipment terminal 3 to MGW apparatus 2, and calling signal 12 is a connection start request signal of communications transmitted to AS apparatus 1 from MGW apparatus 2 upon receipt of calling signal 11.

Disconnect signal 13 is a disconnection request signal which is transmitted from AS apparatus 1 to MGW apparatus 2, and restriction guidance signal 14 is a guidance connection signal of a communication transmitted to mobile equipment 3 from MGW apparatus 2 upon receipt of disconnect signal 13.

FIG. 2 shows a state of AS apparatus 1 and MGW apparatus 2 operating in response to each signal described above. While AS apparatus 1 includes common-carrier-specific restriction information management table 21 and MGW apparatus 2 includes restriction information-class/guidance-class association table 22, each of AS apparatus 1 and MGW apparatus 2 operates by referring to each table.

It is noted that AS apparatus 1 and MGW apparatus 2 are made up of a general computer system including an input apparatus, an output apparatus, a storage apparatus, and a control apparatus; and the above described common-carrier-specific restriction information management table 21 and restriction information-class/guidance-class association table 22 are stored in the storage apparatus; however, other configurations may be used in which they are stored in an external storage apparatus.

In common-carrier-specific restriction information management table 21, restriction content which is established independently by common carriers and restriction class Keys are stored in association with each other. In restriction -class/guidance-class association table 22, restriction content which is established independently by common carriers, restriction class Keys, and restriction guidance class Keys which are established independently by common carriers are stored in association with one another.

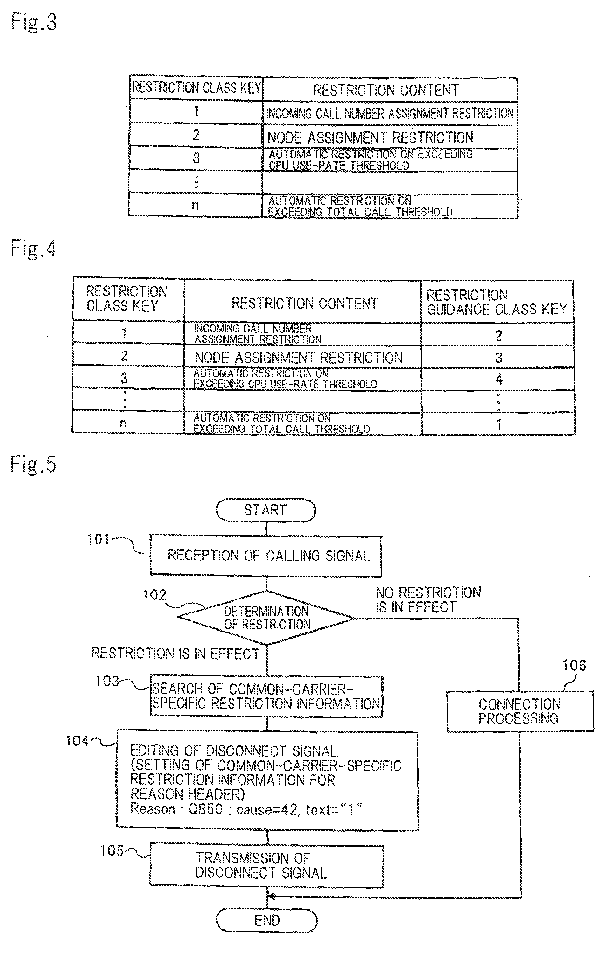

FIG. 3 shows the stored information of common-carrier-specific restriction information management table 21. As shown in FIG. 3, in common-carrier-specific restriction information management table 21, a table configuration is implemented in which restriction class Keys are associated with restriction contents which can be established independently by common carriers.

FIG. 4 shows the stored information of restriction information-class/guidance-class association table 22. As shown in FIG. 4, in restriction information-class/guidance-class association table 22, a table configuration is implemented in which restriction class Keys, restriction contents which can be established independently by common carriers, and restriction guidance class Keys are associated with one other.

It is noted that, in the present exemplary embodiment, the data of common-carrier-specific restriction information management table 21 and the data of restriction -class/guidance-class association table 22 can be subjected to data updating and data synchronization between nodes by performing updates through a maintenance and monitoring apparatus which monitors the communication networks of common carriers.

Referring to the general operation of the present exemplary embodiment, calling signal 11 is transmitted from mobile equipment terminal 3 to MGW apparatus 2, and calling signal 12 is transmitted from MGW apparatus 2 to AS apparatus 1. Upon receipt of calling signal 12 from MGW apparatus 2, AS apparatus 1 checks an actuation state of the congestion restriction processing of its own system and, upon judging that disconnection by restriction is necessary, transmits disconnect signal (class: restriction) 13, which is based on restriction content specific to common carriers, to MGW apparatus 2.

MGW apparatus 2, upon receipt of disconnect signal (class: restriction) 13 from ASV apparatus 1, acquires restriction content specific to common carriers from disconnect signal (class: restriction) 13 and searches restriction guidance information, which MGW apparatus 2 internally manages using restriction content specific to common carriers as a key, to transmit restriction guidance signal 14, in which appropriate restriction guidance information has been set, to mobile equipment terminal 3.

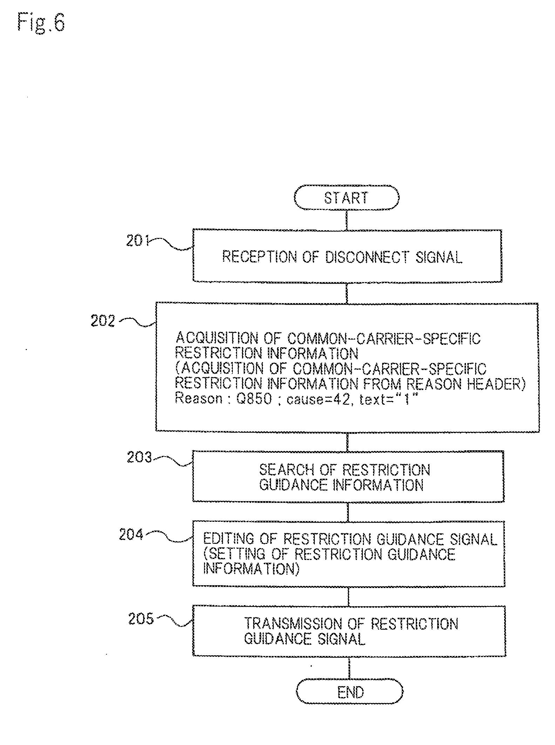

The operations of restriction processing established independently by common carriers and a restriction-guidance connection processing established independently by common carriers shown in FIGS, 1 and 2 respectively will be described with reference to the flowcharts shown in FIGS. 5 and 6 respectively.

FIG. 5 is a flowchart to show the processing operation of setting common-carrier-specific restriction information in AS apparatus 1.

AS apparatus 1 retains current restriction content in a storage section (not shown) such as an internal memory and disk and, upon receipt of calling signal 12 from MGW apparatus 2 (step 101), performs the determination of the current restriction content with reference to the storage section (step 102).

When it is confirmed that a restriction is in effect as a result of the determination at step 102, a restriction class Key which specifies current restriction content is acquired from common-carrier-specific restriction information management table 21 (step 103), and in the editing process of 503 signal, which conveys disconnection when encountering a restricted state in the IMS standard, the obtained restriction class Key is set for the text parameter of Reason header (step 104), and transmitted to MGW apparatus 2 as disconnect signal 13 in FIG. 2 (step 105), thus completing the process.

When it is confirmed that no restriction is in effect as a result of the determination at step 102, connection processing with MGW apparatus 2 is performed (step 106), thus completing the process.

FIG. 6 is a flowchart to show the processing operation for setting restriction guidance information in MGW apparatus 2.

MGW apparatus 2, upon receipt of a 503 signal which is disconnect signal 13 from AS apparatus 1 (step 201), acquires a common-carrier-specific restriction class Key from a text parameter of Reason header contained in the 503 signal (step 202).

Upon acquisition of a restriction class Key at step 202, restriction information-class/guidance-class association table 22 is searched based on the acquired restriction class Key (step 203) to acquire a restriction guidance class Key.

MGW apparatus 2, which includes a storage section (not shown) for storing audio data and display data representing various restriction contents in association with restriction class Keys, reads out the audio data and display data stored in the storage section based on the acquired guidance class Key to perform editing of restriction guidance signal 14 for explaining the restriction content to users of mobile equipment terminal 3 (step 204), and restriction guidance signal 14 is transmitted to mobile equipment terminal 3 (205 in FIG. 4). At mobile equipment terminal 3, adequate guidance for the congestion factor is connected by restriction guidance signal 14.

As so far described above, in the present exemplary embodiment, the AS apparatus and the MGW apparatus cooperate in an IMS system in passing detailed congestion restriction information specific to common carriers to each other so that transmission of the guidance information specific to common carriers can be realized by the MGW apparatus, as a result of which, it is possible to realize a congestion restriction control method equal to those of conventional switchboard systems, thereby promoting smooth transition from conventional systems to IMS systems.

As another exemplary embodiment of the present invention, the basic configuration of which is as described above, although the setting of common-carriers-specific restriction information is made for the text parameter of the Reason header contained in the 503 signal which is transmitted from the AS apparatus to the MGW apparatus, the setting may be made for signals and parameters which are provided independently by common carriers, thereby performing notification.

Further, concerning the management method of the restriction information and the restriction guidance information which are established independently by common carriers, although the present invention is configured such that management is made by way of the common-carrier-specific restriction information management table in the AS apparatus and the restriction information-class/guidance-class association table in the MGW apparatus, management may be performed by reducing the apparatuses to one or the tables to one.

Further, concerning the data management method of the common-carrier-specific restriction information management table in the AS apparatus and the restriction class/guidance class association table in the MGW apparatus, although the present exemplary embodiment is configured such that the updating of data and the synchronization of data between nodes are carried out by performing updates through a maintenance and monitoring apparatus for monitoring the communication networks of common carriers, the configuration may be such that only initial setting is performed at the time of installment without performing updates through a maintenance and monitoring apparatus or such that the synchronization of data is not performed.

By providing a restriction information management table, which is established independently for each common carrier, in the AS apparatus for performing service control, customizing the restriction information for each common carrier is made possible.

By providing an association table between the restriction information and the restriction guidance information which are independently established by each common carrier, in the MGW apparatus for performing call connection, customizing the restriction guidance information for each common carrier is made possible.

In the present exemplary embodiment configured as described above, the following advantages can be achieved.

It is possible to transfer the restriction information established independently by common carriers between nodes by using the information setting parameters specified by the IMS standard. As a result, it is possible to realize restriction processing specific to common carriers within the range of the IMS standard without specific parameters and specific signals being provided by common carriers.

Further, the provision of a table for managing restriction information to be established independently for each common carrier in the AS apparatus for performing service control makes it possible to easily customize the restriction information established independently by common carriers.

Further, the provision of a table for performing the association of restriction information to be established independently for each common carrier with restriction guidance information in the MBW apparatus for performing call connection makes it possible to easily customize the restriction guidance information established independently by common carriers.

Furthermore, as a result of that restriction guidance information can be easily customized, therefore, when replacement of a conventional switchboard system with an IMS system is made, it is possible to provide a restriction processing and a guidance connection processing equal to those of switchboard systems, thereby enabling to promote the transition to IMS systems.

As so far described, although the present invention has been described with reference to exemplary embodiments, the present invention will not be limited to the above described exemplary embodiments. Since one example is shown in the first exemplary embodiment, various alterations, which are understandable to persons skilled in the art, can be made to the configuration and details of the present invention within the scope of this invention.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

## Claims

1. An IMS system including an MGW apparatus for performing call control processing and an AS apparatus for performing service control processing: wherein
said AS apparatus comprises an AS apparatus storage section for retaining a current restriction state, and a common-carrier-specific restriction information management table in which restriction content established independently by a common carrier and a restriction class Key are stored in association with each other, and
said AS apparatus, upon receipt of a connection start request from a terminal via said MGW apparatus, refers to said AS apparatus storage section to confirm whether or not a restriction state is in effect, and when no restriction is in effect, performs connection with said terminal, and when a restriction is in effect, acquires an associated restriction class Key from said common-carrier-specific restriction information management table to transmit a signal, to which the aforementioned acquired restriction class Key has been added, to said MGW apparatus; and wherein
said MGW apparatus comprises a restriction information-class/guidance-class association table in which a restriction class Key and a restriction guidance class Key are stored in association with each other, and an MGW apparatus storage section for storing data representing a variety of restriction contents in association with said restriction class Key, and
said MGW apparatus, upon receipt of a connection start request from said terminal, transmits the request to said AS apparatus, and thereafter upon receipt of said signal from said AS apparatus, acquires said restriction class Key to edit and transmit to said terminal, a restriction guidance signal indicating a restriction content by using data stored in said MGW apparatus storage section in association with the acquired restriction class Key, to said terminal.

2. The IMS system according to claim 1, wherein
a signal to be transmitted from said AS apparatus to said MGW apparatus when a restriction is in effect is a 503 signal of the IMS standard in which said acquired restriction class Key is added to a text parameter of Reason header.

3. An AS apparatus for performing service control processing and for creating an IMS system along with an MGW apparatus for performing call control processing, said AS apparatus comprising
an AS apparatus storage section for retaining a current restriction state, and a common-carrier-specific restriction information management table in which restriction content established independently by a common carrier and a restriction class Key are stored in association with each other, and
said AS apparatus, upon receipt of a connection start request from a terminal via said MGW apparatus, refers to said AS apparatus storage section to confirm whether or not a restriction state is in effect and when no restriction is in effect, performs connection with said terminal and when a restriction is in effect, acquires an associated restriction class Key from said common-carrier-specific restriction information management table to transmit a signal, to which said acquired restriction class Key has been added, to said MGW apparatus.

4. An MGW apparatus for performing call control processing and for creating an IMS system along with an AS apparatus for performing service control, said MGW apparatus comprising,
a restriction information-class/guidance-class association table in which a restriction class Key and a restriction guidance class Key are stored in association with each other, and an MGW apparatus storage section for storing data representing a variety of restriction contents in association with said restriction class Key, and
said MGW apparatus, upon receipt of a connection start request from said terminal, transmits the request to said AS apparatus and thereafter, upon receipt of the signal, to which said restriction class Key has been added, from said AS apparatus, acquires said restriction class Key to edit and transmit to said terminal, a restriction guidance signal indicating a restriction content by using data stored in association with the acquired restriction class Key in said MGW apparatus storage section.

5. A method of notifying congestion restriction performed in an IMS system, said IMS system comprising:
an MGW apparatus comprising a restriction information-class/guidance-class association table in which a restriction class Key and a restriction guidance class Key are stored in association with each other, and an MGW apparatus storage section for storing data representing a variety of restriction content in association with said restriction class Key, and for performing call control processing; and
an AS apparatus comprising an AS apparatus storage section for retaining a current restriction state, and a common-carrier-specific restriction information management table in which restriction content established independently by a common carrier and a restriction class Key are stored in association with each other, and for performing service control processing:
said method comprising:
a process in which said MGW apparatus receives a connection start request from a terminal and transmits the request to said AS apparatus;
a process in which said AS apparatus having received the connection start request from the terminal through said MGW apparatus refers to said AS apparatus storage section to confirm that a restriction is in effect, and acquires an associated restriction class Key from said common-carrier-specific restriction information management table to transmit a signal, to which said acquired restriction class Key has been added, to said MGW apparatus; and
a process in which said MGW apparatus having received said signal from said AS apparatus acquires said restriction class Key to edit and transmit to said terminal, a restriction guidance signal indicating a restriction content using data stored in said MGW apparatus storage section in association with the acquired restriction class Keys.
